# EUROPÄISCHE PATENTANMELDUNG

(11) **EP 0 901 303 A2**
(43) Veröffentlichungstag der Anmeldung: **10.03.1999**
(21) Anmeldenummer: 98250311.2
(22) Anmeldetag: 04.09.1998
(51) Int. Cl.: H04Q 11/04

(54) **ISDN-Kommunikationsanlage und Teilnehmerendeinrichtung**

(30) Priorität: 04.09.1997 DE 19739701
(71) Anmelder: ELMEG GmbH Kommunikationstechnik, D-31228 Peine (DE)
(72) Erfinder: Simon, Joachim, Dipl.-Phys., 24247 Mielkendorf (DE)
(74) Vertreter: Christiansen, Henning, Dipl.-Ing.

(57) **Zusammenfassung**

ISDN-Telekommunikationsanlage (3) mit mindestens einer amtsseitigen So-Schnittstelle zum Anschluß an ein Netzabschlußgerät (1) oder mit mindestens einer amtsseitigen U-Schnittstelle zum direkten Anschluß an eine digitale Vermittlungsstelle (2) sowie mit einer teilnehmerseitigen So-Schnittstelle zur Bereitstellung eines internen So-Busses und zum Anschluß von ISDN-Endgeräten (4, 5) an den internen So-Bus, wobei der amtsseitigen So- bzw. U-Schnittstelle und der teilnehmerseitigen So-Schnittstelle ein erstes Koppelfeld zwischengeschaltet ist, das die auf einem B-Kanal des internen So-Busses teilnehmerseitig eintreffenden Bytes jeweils in mehrere Bitgruppen zerlegt, die jeweils entsprechend einem bitratenreduzierten Übertragungsstandard von einem digitalen Endgerät (11.1 bis 11.4) stammen und wobei der amtsseitigen So- bzw. U-Schnittstelle und dem ersten Koppelfeld ein Transcoder zwischengeschaltet ist, der amtsseitig einen ISDN-Übertragungsstandard und teilnehmerseitig den bitratenreduzierten Übertragungsstandard des digitalen Endgeräts (11.1 bis 11.4) unterstützt. Die Koppelfelder können sowohl räumlich getrennt wie auch im Zeitmultiplexbetrieb in HW oder SW implementiert sein.

## Beschreibung

Die Erfindung betrifft eine ISDN-Telekommunikationsanlage gemäß dem Oberbegriff des Anspruchs 1 sowie eine Teilnehmerendeinrichtung zum Anschluß an eine derartige ISDN-Telekommunikationsanlage gemäß dem Oberbegriff des Anspruchs 6.

Bei dem bekannten ISDN-Basisanschluß ist in den Räumen des Benutzers in der Regel ein sogenanntes Netzabschlußgerät (NTBA - network terminator basic access) installiert, das amtsseitig eine U_{K0}-Schnittstelle aufweist und über eine herkömmliche 2-Draht-Leitung mit der zuständigen Ortsvermittlungsstelle (DIVO - Digitale Vermittlungsstelle Ortsnetz) verbunden ist. Teilnehmerseitig weist das Netzabschlußgerät dagegen eine S₀-Schnittstelle auf und ist über eine 4-Draht-Leitung parallel mit bis zu acht ISDN-Endgeräten verbunden, wobei die individuelle Adressierung der einzelnen ISDN-Endgeräte durch eine im Übertragungsprotokoll festgelegte MSN (multi subscriber number) erfolgt. Ein derartiger ISDN-Basisanschluß verfügt zur Datenübertragung über zwei B-Kanäle mit einer Übertragungskapazität von jeweils 64 kBit/s und weist zusätzlich einen D-Kanal mit einer Übertragungskapazität von 16 kBit/s auf, der zur Steuerung eines Protokolls für vermittlungstechnische Daten, vorzugsweise das standardisierte EDSS1, dient.

An einen derartigen ISDN-Basisanschluß können zwar physikalisch bis zu acht ISDN-Endgeräte angeschlossen werden, jedoch lassen sich nur zwei dieser ISDN-Endgeräte gleichzeitig betreiben, da jeder der beiden B-Kanäle nur den Aufbau einer einzigen Verbindung zum Netz ermöglicht.

Bekannt sind weiterhin ISDN-Telekommunikationsanlagen, die ihrerseits eine S₀-Schnittstelle aufweisen und mit dieser anstelle der einzelnen ISDN-Endgeräte an das Netzabschlußgerät angeschlossen werden. Teilnehmerseitig weisen die bekannten ISDN-Telekommunikationsanlagen ebenfalls S₀-Schnittstellen auf, die einen internen S₀-Bus bereitstellen, an den standardisierte ISDN-Endgeräte angeschlossen werden können. Zusätzlich weisen solche TK-Anlagen i.A. auch noch Anschlußmöglichkeiten für einen Betrieb herkömmlicher analoger Endgeräte auf. Auch ist es bekannt, in der ISDN-Telekommunikationsanlage einen Vermittlungsbaustein vorzusehen, der eine Kommunikation der angeschlossenen ISDN-Endgeräte untereinander und mit den analogen Endgeräten ermöglicht, ohne eine gebührenpflichtige Verbindung zur Vermittlungsstelle aufbauen zu müssen, was als Inhouse-Betrieb bezeichnet wird.

Die bekannten ISDN-Telekommunikationsanlagen ermöglichen somit zwar eine Vielzahl unterschiedlicher Komfort- oder Vermittlungsfunktionen, ändern jedoch nichts an dem Kernproblem, daß an einem ISDN-Basisanschluß wegen der geringen Zahl von nur zwei B-Kanälen nur zwei Endgeräte gleichzeitig eine Kommunikationsverbindung haben können.

Der Erfindung liegt somit die Aufgabe zugrunde, die Möglichkeit zu schaffen, an einer ISDN-Telekommunikationsanlage für einen internen ISDN-Basisanschluß mehr als zwei Endgeräte gleichzeitig aktiv betreiben zu können.

Die Aufgabe wird, ausgehend von einer bekannten ISDN-Telekommunikationsanlage gemäß dem Oberbegriff des Anspruchs 1, durch die im kennzeichnenden Teil des Anspruchs 1 angegebenen Merkmale bzw. - hinsichtlich einer entsprechenden Teilnehmerendeinrichtung - durch die Merkmale des Anspruchs 6 gelöst.

Die Erfindung schließt die technische Lehre ein, auf der Teilnehmerseite einer ISDN-Telekommunikationsanlage eine bitratenreduzierte Kodierung zu verwenden, um über einen B-Kanal mehrere Verbindungen aufbauen zu können, wobei die von den verschiedenen Endgeräten herrührenden Datenströme in dem B-Kanal in der ISDN-Telekommunikationsanlage separiert und in das 64 kBit/s-Übertragungsformat des ISDN-Standards umgesetzt werden, sofern der Verbindungspartner nicht selbst ein internes Endgerät mit bitratenreduzierter Kodierung ist.

Die erfindungsgemäße Teilnehmerendeinrichtung weist zum Anschluß an den internen So-Bus der erfindungsgemäßen ISDN-Telekommunikationsanlage eine So-Schnittstelle auf und verfügt über mehrere Endgeräte, die entsprechend einem bitratenreduzierten Übertragungsstandard arbeiten. Die von den einzelnen Endgeräten ausgehenden Datenströme werden dann durch ein Koppelfeld in einen B-Kanal des So-Busses eingeschachtelt, um über einen B-Kanal mehrere Verbindungen abwickeln zu können und dadurch die effektive Übertragungskapazität der B-Kanäle zu erhöhen.

In der bevorzugten Ausführungsform der Erfindung handelt es sich bei der Teilnehmerendeinrichtung um eine DECT-Funkbasisstation mit mehreren schnurlosen Telefonen, die jeweils entsprechend dem DECT-Übertragungsstandard

ETS 300 175 mit einer Übertragungsrate von 32 kBit/s nach ITU Rec. G.726 arbeiten, wobei die Sprachdaten bei einer Abtastrate von 4 kSamples/s jeweils im 4-Bit-Format in Form von Nibbles vorliegen. Das Koppelfeld in der Teilnehmerendeinrichtung setzt dann die von den schnurlosen Telefonen stammenden Nibbles jeweils paarweise zu einem Byte entsprechend dem ISDN-Übertragungsstandard zusammen.

Das vorstehend beschriebene Koppelfeld kann beispielsweise in Software auf der Hardware-Plattform des integrierten ISDN-Prozessor VNS 80000 des US-Herstellers VLSI realisiert werden, der sich hierfür besonders eignet. Es ist jedoch auch möglich, das Koppelfeld mit hierfür speziell zu entwickelnden Hardwarekomponenten zu realisieren.

Gemäß der Erfindung ist weiterhin eine ISDN-Telekommunikationsanlage vorgesehen, die den Betrieb derartiger Teilnehmerendeinrichtungen mit bitratenreduzierten Kodierungen ermöglicht. Hierzu weist die erfindungsgemäße ISDN-Telekommunikationsanlage ein Koppelfeld auf, in dem die von den bitratenreduziert arbeitenden Endgeräten stammenden und in Bytes zusammengefaßten Datenströme in Nibbles zerlegt werden. Weiterhin weist die ISDN-Telekommunikationsanlage einen Transcoder auf, der zwischen dem bitratenreduzierten Übertragungsstandard und dem ISDN-Übertragungsstandard umsetzt.

Die Erfindung ist nicht auf den Einsatz an einem ISDN-Basisanschluß beschränkt, sondern läßt sich in entsprechender Anpassung auch an einem ISDN-Primärmultiplexanschluß verwenden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: als bevorzugtes Ausführungsbeispiel der Erfindung eine ISDN-Telekommunikationsanlage mit mehreren ISDN-Endgeräten sowie einer DECT-Funkbasisstation mit mehreren schnurlosen Telefonen als Blockschaltbild,
- Figur 2: die DECT-Funkbasisstation aus Figur 1 detailliert als Blockschaltbild sowie
- Figur 3: die ISDN-Telekommunikationsanlage aus Figur 1 detailliert als Blockschaltbild.

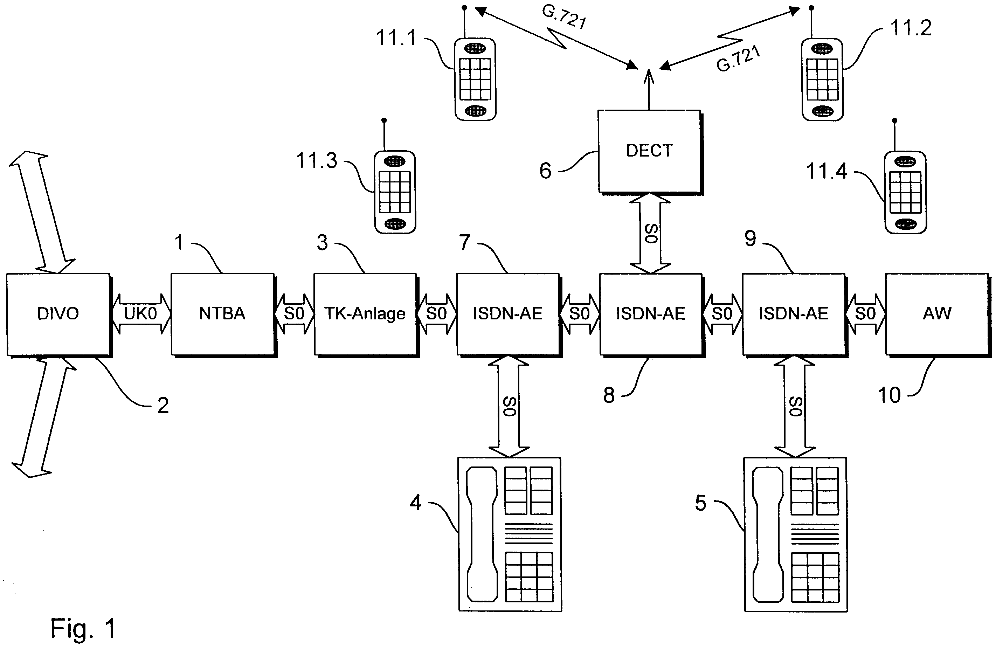

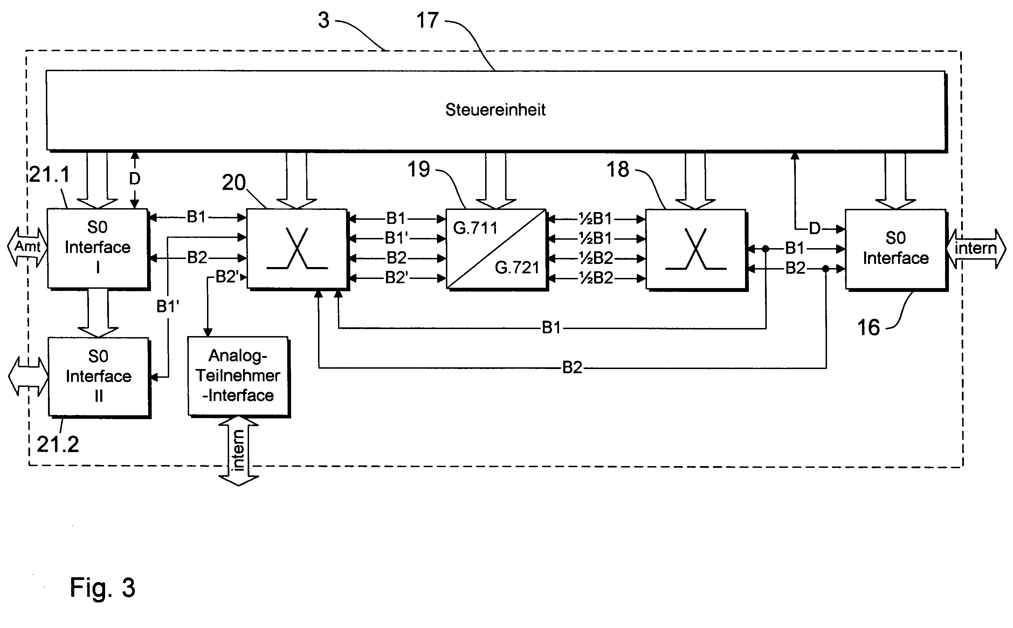

Die in Figur 1 gezeigte Anlagenkonfiguration ermöglicht den Anschluß einer Vielzahl von Endgeräten an einem ISDN-Basisanschluß, der an einem Netzabschlußgerät (NTBA - network terminator basic access) 1 bereitgestellt wird, wobei das Netzabschlußgerät 1 in den Räumen des Benutzers installiert ist und amtsseitig eine U_{K0}-Schnittstelle aufweist, die über eine herkömmliche 2-Draht-Leitung mit einer Ortsvermittlungsstelle (DIVO - Digitale Vermittlungsstelle Ortsnetz) 2 verbunden ist. Die Ortsvermittlungsstelle 2 ermöglicht den Verbindungsaufbau zu anderen Teilnehmern und ist hierzu in das ISDN-Netz eingebunden. Teilnehmerseitig weist das Netzabschlußgerät 1 eine S₀-Schnittstelle auf, die über eine 4-Draht-Leitung mit einer erfindungsgemäßen ISDN-Telekommunikationsanlage 3 verbunden ist, die detailliert in Figur 3 dargestellt ist und noch eingehend beschrieben wird.

Zusätzlich zu der (den) amtsseitigen S₀-Schnittstelle(n) weist die ISDN-Telekommunikationsanlage 3 mindestens eine weitere S₀-Schnittstelle auf, die einen internen S₀-Bus bereitstellt und teilnehmerseitig den Anschluß der einzelnen Teilnehmerendeinrichtungen 4, 5, 6 ermöglicht. Hierzu sind in den Räumen des Benutzers mehrere ISDN-Anschlußeinheiten (ISDN-AE) 7, 8, 9 verteilt angeordnet, die jeweils den Anschluß einer Teilnehmerendeinrichtung 4, 5 bzw. 6 ermöglichen und an den internen S₀-Bus angeschlossen sind, wobei der interne S₀-Bus durch die einzelnen ISDN-Anschlußeinheiten 7, 8, 9 durchgeschleift ist und an seinem Ende mit einem Abschlußwiderstand 10 verbunden ist, der Leitungsreflexionen auf dem internen S₀-Bus verhindert.

In der dargestellten Anlagenkonfiguration sind als Teilnehmerendeinrichtungen zwei herkömmliche ISDN-Telefone 4, 5 sowie eine DECT-Funkbasisstation 6 mit vier schnurlosen Telefonen 11.1 bis 11.4 angeschlossen.

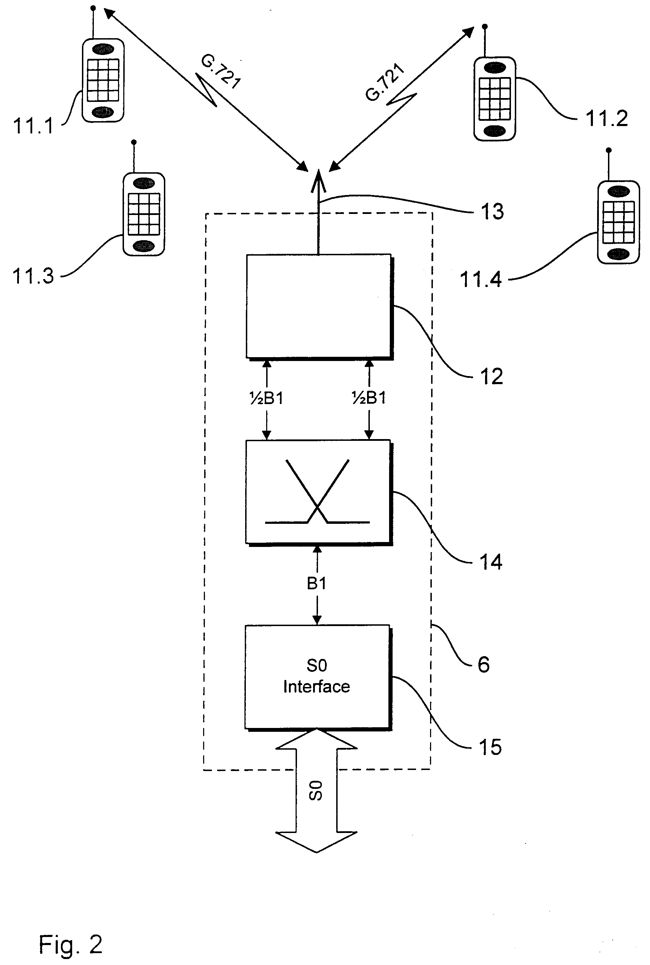

Im folgenden wird zunächst die Funktionsweise der erfindungsgemäßen DECT-Funkbasisstation 6 beschrieben, die detailliert in Figur 2 dargestellt ist und einen gleichzeitigen Betrieb von zwei der schnurlosen Telefone 11.1 bis 11.4 ermöglicht. Hierzu weist die DECT-Funkbasisstation 6 eine herkömmliche DECT-Sende/Empfangsstation 12 auf, die mit einer Antenne 13 verbunden ist und eine Kommunikation mit den schnurlosen Telefonen 11.1 bis 11.4 entsprechend dem von der ETSI festgelegten Übertragungsstandard ETS 300175 ermöglicht, der eine Datenübertragungsrate von 32 kBit/s nach ITU (früher CCITT) Rec. G.726 vorsieht. Da für die ISDN-Übertragung im öffentlichen ISDN-Netz der Übertragungsstandard G.711 mit einer Datenübertragungsrate von 64 kBit/s vorgeschrieben ist, kann die DECT-Sende/Empfangsstation 12 nicht direkt an den S₀-Bus angeschlossen werden. Zur Anpassung der verschiedenen Übertragungsstandards weist die erfindungsgemäße DECT-Funkbasisstation 6 deshalb ein Koppelfeld 14 auf, das mit der DECT-Sende/Empfangsstation 12 verbunden ist und von dieser die Datenströme von den jeweils aktiven schnurlosen Telefonen 11.1, 11.2 erhält, die entsprechend dem Übertragungsstandard G.726 mit einer Datenübertragungsrate von 32 kBit/s jeweils im 4-Bit-Format kodiert sind und somit einem halben B-Kanal des S₀-Buses entsprechen. Das Koppelfeld 14 setzt die von den beiden aktiven schnurlosen Telefonen 11.1, 11.2 stammenden, jeweils 4-Bit langen Nibbles zu einem Byte zusammen, das dem B-Kanal-Format des ISDN-Übertragungsstandards G.711 entspricht. Die von den schnurlosen Telefonen 11.1, 11.2 herrührenden Datenströme werden also über einen einzigen B-Kanal übertragen und bilden in diesem B-Kanal somit "Subchannels". Amtsseitig weist die DECT-Funkbasisstation 6 eine S₀-Schnittstelle 15 auf, die den Anschluß an die mit der ISDN-Telekommunikationsanlage 3 verbundene ISDN-Anschlußeinheit 8 ermöglicht.

Im folgenden wird nun die Funktionsweise der erfindungsgemäßen ISDN-Telekommunikationsanlage 3 beschrieben, die detailliert in Figur 3 dargestellt ist. Teilnehmerseitig weist die ISDN-Telekommunikationsanlage 3 eine S₀-Schnittstelle 16 auf, die den internen S₀-Bus bereitstellt und einen Anschluß der Teilnehmerendeinrichtungen ermöglicht. Die S₀-Schnittstelle 16 hat hierbei die Aufgabe, die Datenübertragung entsprechend dem ISDN-Übertragungsstandard G.711 zu steuern, wobei die S₀-Schnittstelle 16 die im D-Kanal übertragenen Steuerdaten an eine Steuereinheit 17 überträgt, welche die vermittlungstechnische Datenübertragung steuert. So wertet die Steuereinheit 17 die auf dem D-Kanal eintreffenden Steuerdaten aus und ermittelt daraus, ob die auf dem B-Kanal eingehenden Daten von einem ISDN-Endgerät 4, 5 herrühren oder zwei der vorstehend beschriebenen "Subchannels" enthalten, die von Endgeräten 11.1 bis 11.4 stammen, die mit der bitratenreduzierten Kodierung G.726 arbeiten.

Sowohl die Steuereinheit 17 wie auch die Funkbasisstation Fig.2 verfügen über abgestimmte proprietäre Erweiterungen des standardisierten DSS1-Protokolls, um das handling von Endgeräten mit 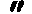 Subchanneling" abwickeln zu können.

Die teilnehmerseitig eingehenden B-Kanal-Daten werden dann einem Koppelfeld 18 zugeführt, das die einzelnen Bytes im B-Kanal jeweils in vier Bit lange Nibbles zerlegt, so daß die beiden B-Kanäle von dem Koppelfeld 18 in die vier "Subchannels" aufgeteilt werden, die entsprechend dem DECT-Übertragungsstandard nach G.726 kodiert sind. Nachfolgend werden die vier "Subchannels" dann von einem Transcoder 19 von der DECT-Übertragungsrate nach G.726 in die ISDN-Übertragungsrate nach G.711 umgesetzt. Am amtsseitigen Anschluß des Transcoders 19 erscheinen also vier B-Kanäle B1, B1', B2, B2' entsprechend der ISDN-Übertragungsrate nach G.711, die einem weiteren Koppelfeld 20 zugeführt werden, das die teilnehmerseitig anfallenden B-Kanäle einer (oder mehreren) weiteren S₀-Schnittstelle(n) 21 zuführt, die mit dem Netzabschlußgerät(en) 1 verbunden ist (sind) und eine Netzanbindung ermöglicht.

Falls die an der S₀-Schnittstelle 16 eingehenden B-Kanal-Daten von einem der schnurlosen Telefone 11.1 bis 11.4 stammen und demzufolge zwei "Subchannels" enthalten wählt das Koppelfeld 20 die zugehörigen B-Kanäle am amtsseitigen Anschluß des Transcoders 19 aus und leitet diese der (den) S₀-Schnittstelle(n) 21 oder anderen internen Teilnehmerschnittstellen, die im G.711 - Format arbeiten, zu. Stammen die an der S₀-Schnittstelle 16 eingehenden B-Kanal-Daten dagegen von einem ISDN-Endgerät 4, 5, so wird der Transcoder 19 umgangen und des Koppelfeld wählt die direkt von der S₀-Schnittstelle 16 kommenden B-Kanäle aus und leitet diese an die S₀-Schnittstelle 21 weiter.

Die vorstehende Beschreibung betrifft einen Verbindungsaufbau, der von einem der angeschlossenen Endgeräte 11.1 bis 11.4 bzw. 4, 5 ausgeht. Bei einem eingehenden Anruf prüft die Steuereinheit 17 dagegen anhand der von der S₀-Schnittstelle 21 gelieferten D-Kanal-Daten, ob eines der ISDN-Endgeräte 4, 5 oder eines der schnurlosen Telefone 11.1 bis 11.4 angesprochen werden soll.

Bei einer Adressierung eines der ISDN-Endgeräte 4, 5 leitet das Koppelfeld 20 die B-Kanal-Daten direkt an die teilnehmerseitige S₀-Schnittstelle 16 weiter, so daß der Transcoder 19 umgangen wird.

Wird dagegen eines der schnurlosen Telefone 11.1 bis 11.4 angesprochen, so werden die an der S₀-Schnittstelle 21 eingehenden B-Kanal-Daten von dem Koppelfeld 20 dem Transcoder 19 zugeführt, der den Datenstrom von der ISDN-Übertragungsrate nach G.711 in die DECT-Übertragungsrate von 32 kBit/s nach G.726 umsetzt. Anschließend fügt das Koppelfeld 18 die jeweils vier Bit langen Nibbles paarweise zu einem Byte zusammen, um eine Übertragung über den internen S₀-Bus zu ermöglichen. Bei ungerader Anzahl von aktivenn schnurlosen Telefonen 11.1 bis 11.4 wird das freie Nibble hierbei durch Leerinformationen aufgefüllt, während das Koppelfeld 18 bei zwei oder vier aktiven schnurlosen Telefonen 11.1 bis 11.4 die zugehörigen Nibbles zu einem oder zwei Byte(s) zusammenfaßt.

Die dargestellte erfindungsgemäße Anlagenkonfiguration ermöglicht an einem internen ISDN-Basisanschluß somit wahlweise einen reinen ISDN-Betrieb mit maximal zwei gleichzeitig arbeitenden ISDN-Endgeräten 4, 5 auf jeweils einem B-Kanal oder einen gemischten Betrieb mit zwei schnurlosen Telefonen 11.1, 11.2 zusammen auf dem einen B-Kanal und einem ISDN-Endgerät 4 bzw. 5 auf dem anderen B-Kanal oder einen reinen bitratenreduzierten Betrieb mit maximal vier gleichzeitig im Inhouse-Betrieb arbeitenden schnurlosen Telefonen 11.1 bis 11.4, wobei jeweils zwei der schnurlosen Telefon 11.1 bis 11.4 auf einem B-Kanal zusammengefaßt werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. ISDN-Telekommunikationsanlage (3) mit
einer oder mehreren amtsseitigen So-Schnittstellen (21) zum Anschluß an ein Netzabschlußgerät (1) oder mit amtsseitigen U-Schnittstellen zum direkten Anschluß an eine digitale Vermittlungsstelle (2) sowie
mit mindestens einer teilnehmerseitigen So-Schnittstelle (16) zur Bereitstellung eines internen So-Busses und zum Anschluß von ISDN-Endgeräten (4, 5) an den internen So-Bus,
**dadurch gekennzeichnet**,
daß der amtsseitigen So- bzw. U-Schnittstelle (21) und der teilnehmerseitigen So-Schnittstelle (16) ein erstes Koppelfeld (18) zwischengeschaltet ist, das die auf einem B-Kanal des internen So-Busses teilnehmerseitig eintreffenden Bytes jeweils in mehrere Bitgruppen zerlegt, die jeweils entsprechend einem bitratenreduzierten Übertragungsstandard von einem digitalen Endgerät (11.1 bis 11.4) stammen,
daß der amtsseitigen So- bzw. U-Schnittstelle (21) und dem ersten Koppelfeld (18) ein Transcoder (19) zwischengeschaltet ist, der amtsseitig einen ISDN-Übertragungsstandard und teilnehmerseitig den bitratenreduzierten Übertragungsstandard des digitalen Endgeräts (11.1 bis 11.4) unterstützt.

2. ISDN-Telekommunikationsanlage (3) nach Anspruch 1, **dadurch gekennzeichnet**, daß dem Transcoder (19) und der amtsseitigen So-Schnittstelle (21) ein mit der teilnehmerseitigen So-Schnittstelle (16) verbundenes zweites Koppelfeld (20) zwischengeschaltet ist, welches die amtsseitigen B-Kanäle wahlweise mit der teilnehmerseitigen So-Schnittstelle (16) oder dem Transcoder (19) verbindet.

3. ISDN-Telekommunikationsanlage (3) nach Anspruch 2, **dadurch gekennzeichnet**, daß zur Steuerung des ersten und/oder zweiten Koppelfeldes (18, 20) eine Steuereinheit (17) vorgesehen ist, die zur Auswertung der D-Kanal-Protokoll-Daten mit der amtsseitigen So-Schnittstelle (21) und der teilnehmerseitigen So-Schnittstelle (16) verbunden ist.

4. ISDN-Telekommunikationsanlage (3) nach einem der vorhergehenden Ansprüche, **dadurch gekennzeichnet**, daß der bitratenreduzierte Übertragungsstandard der ITU - Empfehlung G.726 folgt.

5. ISDN-Telekommunikationsanlage (3) nach einem der vorhergehenden Ansprüche, **dadurch gekennzeichnet**, daß der ISDN-Übertragungsstandard der ITU - Empfehlung G.711 folgt.

6. Digitale Teilnehmerendeinrichtung (6) zum Anschluß an eine ISDN-Telekommunikationsanlage (3) nach einem der vorhergehenden Ansprüche, mit
mindestens zwei, entsprechend dem bitratenreduzierten Übertragungsstandard arbeitenden digitalen Telekommunikations-Endgeräten (11.1 bis 11.4) und
einer So-Schnittstelle (15) zum Anschluß an den internen So-Bus der ISDN-Telekommunikationsanlage (3),
**dadurch gekennzeichnet**,
daß den Telekommunikations-Endgeräten (11.1 bis 11.4) und der So-Schnittstelle (15) ein Koppelfeld (14) zwischengeschaltet ist, das teilnehmerseitig den bitratenreduzierten Übertragungsstandard unterstützt und die teilnehmerseitig von den Telekommunikations-Endgeräten (11.1 bis 11.4) eintreffenden Bitgruppen zu einem Byte zusammenfügt und dieses zur Übertragung über den B-Kanal des internen So-Busses an die So-Schnittstelle (15) weitergibt.

7. Teilnehmerendeinrichtung (6) nach Anspruch 6, **gekennzeichnet durch** die Ausbildung als DECT-Funkbasisstation, wobei die Telekommunikations-Endgeräte Mobilteile (11.1 bis 11.4) der DECT-Funkbasisstation sind und der bitratenreduzierte Übertragungsstandard der ITU - Empfehlung G.726 folgt.

8. ISDN-Telekommunikationsanlage (3) nach Anspruch 2, **dadurch gekennzeichnet**, daß für die Aufsplittung der B-Kanäle in nibbles zur nachfolgenden Transcodierung sowie die anschließende Weitervermittlung als B-Kanäle im G.711-Format (vice versa) zwei räumlich getrennte Koppelfelder in Hardware oder Software-Realisierung vorgesehen sind oder ein im Zeitmultiplex betriebenes einheitliches in Hard- und/oder Software implementiertes Koppelfeld vorgesehen ist.
